# EUROPEAN PATENT APPLICATION

(11) **EP 1 026 478 A1**
(43) Date of publication of application: **09.08.2000**
(21) Application number: 00830061.8
(22) Date of filing: 28.01.2000
(51) Int. Cl.: G01D 5/241, G01B 7/30

(54) **Driving and position detecting unit for a rotatable member**

(30) Priority: 02.02.1999 IT TO990070
(71) Applicant: C.R.F. Societa' Consortile per Azioni, 10043 Orbassano (Torino) (IT)
(72) Inventor: Pizzi, Marco, 10043 Orbassano, (Torino) (IT); Koniachkine, Valerian, 10043 Orbassano, (Torino) (IT); Sinesi, Sarbino, 10045 Piossasco, (Torino) (IT)
(74) Representative: Notaro, Giancarlo

(57) **Abstract**

A driving and position detecting unit for a rotatable member, for example for the needle (4) of an indicator instrument, comprises a support (1) on which is rotatably mounted a shaft (3) carrying the driven member (4). The support 1 carries motor means (8), such as a piezoelectric motor or an electrostatic step motor, for driving rotation of the driven member (4). The rotating shaft (3) is associated to a disc (6) set opposite to a second disc (7) fixed to the support (1). Each of the two discs (6, 7) carries electrodes coated with a dielectric material which occupy only sector portions of the corresponding disc in a way whereby the set made up of the two discs (6, 7) constitutes a variable-capacitance capacitor, the capacitance varying according to the angular position of the rotating disc (6)

## Description

The present invention relates to a driving and position detecting unit for a rotatable member, such as the needle of an indicator instrument.

The object of the present invention is to provide a unit of the type referred to above which is of simple construction and has a relatively low cost, and which, nevertheless, has a precise and efficient operation.

In order to achieve the above object, the invention provides a driving and position detecting unit of the type specified above, characterized in that it comprises:
a support;
a shaft which is rotatably mounted on the support and connected to a driven member, such as the needle of an indicator instrument;
motor means, carried by the support, for driving rotation of the rotatable shaft; and
sensor means for detecting the angular position of the rotatable member, which include two parallel and opposite discs, one of which is fixed to the support and the other is connected to the rotatable shaft, both said discs bearing electrodes coated with dielectric material which occupy only sector portions of each respective disc, in such a way that the set of the two discs makes up a capacitor with a capacitance that varies according to the angular position of the rotating disc.

The motor means used by the device according to the invention may be of any type; for example, they may consist of a piezoelectric motor or also an electrostatic step motor of the type that forms the subject of the European Patent Application EP-A-0 837 550 of the present applicant.

According to the invention, associated to the unit described above are electronic control means designed to control the motor means and to receive the output signals from the sensor means for detecting capacitance, so as to stop the driven member when a desired position is reached.

In order to reduce the effects of wear due to the friction between the discs, depressed surface portions, may be provided on the bottom of which the electrically active material is laid.

Further characteristics and advantages of the invention will emerge from the ensuing description, with reference to the attached drawings, which are provided purely as a non-limiting example and in which:
Figure 1 is a schematic cross-sectional view of a unit according to the invention;
Figure 2 is a schematic perspective view at an enlarged scale of the pair of discs used in the unit of Figure 1;
Figure 3 is a front view of a variant of the discs of Figure 2;
Figure 4 is a perspective view of the discs made according to the solution illustrated in Figure 3; and
Figure 5 is a further partial cross-sectional view at an enlarged scale of the discs used in the assembly according to the invention.

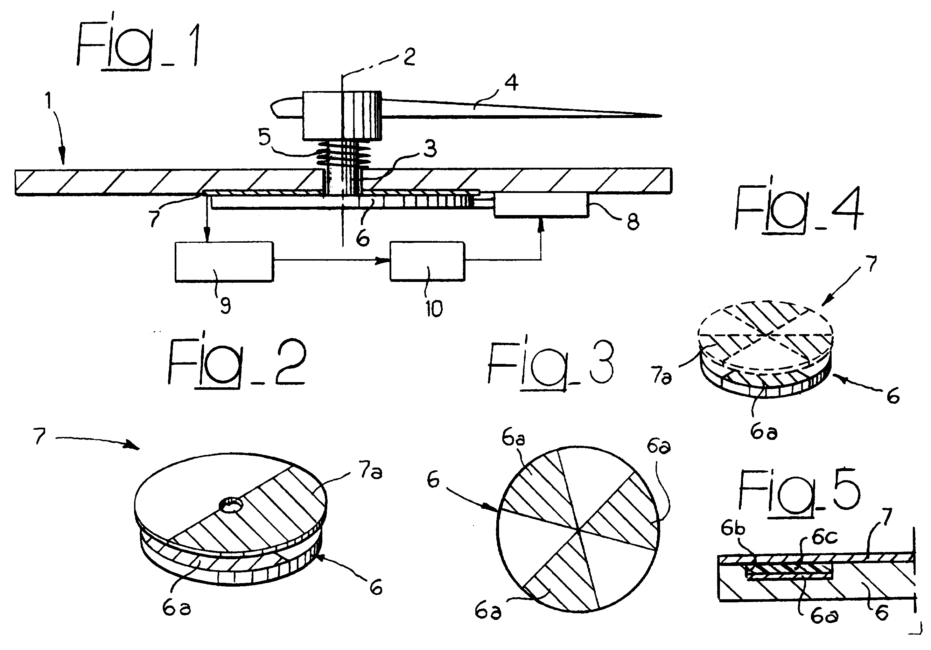

In Figure 1, the reference number 1 designates, as a whole, a fixed support, in the form of a disc, which constitutes the dial of an indicating instrument, for example an indicator for the dashboard of a motor vehicle. The disc 1 supports a shaft 3 in such a way that the latter is free to turn about an axis 2, the shaft 3 carrying at one end a needle or pointer 4 of the indicating instrument, which is designed to co-operate with a graduated scale appearing on the fixed disc 1. Associated to the shaft 3 is a helical spring 5 which tends to pull the shaft 3 back upwards. The constructional details regarding the supporting disc 1, the shaft 3, the way in which the shaft 3 is mounted so that it is free to turn within the disc 1, and the pointer 4 are not illustrated herein, given that such components may be made in any known way and in so far as such details, taken alone, do not fall within the scope of the present invention. The elimination of these items from the drawings moreover makes the latter more readily and easily understandable.

Associated to the bottom end of the shaft 3 (see Figure 1) is a disc 6, which is thus free to turn with respect to the fixed support 1. The disc 6 is set parallel and opposite to a further disk 7, which is connected rigidly to the fixed support 1. The disc 6 is controlled in rotation by motor means 8 of any known type, for example by a piezoelectric motor or by an electrostatic stepper motor of the type forming the subject of the European Patent Application of the present applicant as identified above. Any type of motor suited for microelectronics applications is, however, utilizable. In the case of an electrostatic-effect motor, the latter in practice comprises one or more electrostatic "petals" which come into frictional contact with the periphery of the rotating disc 6 and impress on the latter, at regular time intervals, a thrust in the tangential direction.

The two discs 6, 7 have their sector portions 6a, 7a carrying electrodes coated with dielectric material. This structure constitutes a variable-capacitance capacitor, the capacitance of the capacitor being a function of the relative angular position of the two discs 6, 7. Sensor means 9 of any known type are connected to the electrodes 6a, 7a, the said sensor means being designed to detect the capacitance of the capacitor consisting of the two discs 6, 7 and designed to send, accordingly, a signal indicating the angular position of the rotating disc 6 to an electronic control unit 10, which activates the motor 8 until the desired position is reached.

In order to reduce the effects of wear due to friction between the discs, each electrode 6a may be set at the bottom of a recess 6b made in the disc 6, the remaining part of the recess being filled with a layer 6c of PVDF or another suitable dielectric material.

Of course, without prejudice to the principle of the invention, the details of construction and the embodiments may vary widely with respect to what is herein described and illustrated purely to provide an example, without thereby departing from the sphere of the present invention.

## Claims

1. A driving and position detecting unit for a rotatable member (4), such as the needle of an indicator instrument, comprising:
a support (1);
a shaft (3) which is rotatably mounted on the support (1) and connected to a driven member (4), such as the needle of an indicator instrument;
motor means (8), carried by the support (1), for controlling rotation of the rotatable shaft (3); and
sensor means (6, 7, 9) for detecting the angular position of the rotatable member (6, 7), which include two parallel and opposite discs (6, 7), one of which (7) is fixed to the support (1) and the other (6) is connected to the rotatable shaft (3), both discs (6, 7) bearing electrodes (6a, 7a) coated with dielectric material which occupy only sector portions of each respective disc, in such a way that the set of the two discs (6, 7) makes up a capacitor with a capacitance that varies according to the angular position of the rotating disc (6).

2. A driving unit according to Claim 1, characterized in that it comprises electronic control means (10) designed to receive the output signals from said sensor means (9) and to control accordingly the above-mentioned motor means (8).

3. A driving unit according to Claim 1, characterized in that each one of the two discs (6, 7) has a single electrode which occupies a 180° sector.

4. A driving unit according to Claim 1, characterized in that each one of the above-mentioned two discs (6, 7) has a plurality of sectors occupied by electrodes alternating with an equal number of sectors that are not occupied by electrodes.

5. A driving unit according to Claim 1, characterized in that each electrode is set on the bottom of a depressed portion of the surface of the respective disc (6, 7).

6. A driving unit according to Claim 1, characterized in that the aforementioned motor means consist of a piezoelectric motor.

7. A driving unit according to Claim 1, characterized in that the aforementioned motor means consist of an electrostatic stepper motor.
